Europäisches Patentamt

European Patent Office

Office européen des brevets

(11) Publication number: **0 037 130**
**B1**

(12) EUROPEAN PATENT SPECIFICATION

(45) Date of publication of patent specification: 16.07.86

(21) Application number: 81200209.5

(22) Date of filing: 23.02.81

(51) Int. Cl.⁴: **G 06 F 15/332**

(54) Arrangement for calculating the discrete fourier transform by means of two circular convolutions.

(30) Priority: **17.03.80 NL 8001559**

(43) Date of publication of application:
**07.10.81 Bulletin 81/40**

(45) Publication of the grant of the patent:
**16.07.86 Bulletin 86/29**

(84) Designated Contracting States:
**BE CH DE FR GB IT LI NL SE**

(56) References cited:
**IEEE TRANSACTIONS ON ACOUSTICS,
SPEECH AND SIGNAL PROCESSING, vol.
ASSP-25, no. 4, August 1977, New y(New York, US
KOLBA et al. "A prime factor FFT algorithm
using high-speed convolution", pages 281-294.**

**IEEE TRANSACTIONS ON ACOUSTICS,
SPEECH AND SIGNAL PROCESSING, vol.
ASSP-22, no. 2, April 1974 New York, US
AGARWAL et al. "Fast convolution using
fermat number transforms with applications to
digital filtering", pages 87-97.**

. (73) Proprietor: **N.V. Philips' Gloeilampenfabrieken
Groenewoudseweg 1
NL-5621 BA Eindhoven (NL)**

(72) Inventor: **Claasen, Theodoor Antonius C. M.
c/o INT. OCTROOIBUREAU B.V. Prof. Holstlaan 6
NL-5656 AA Eindhoven (NL)**
Inventor: **Mecklenbräuker, Wolfgang F.G.
c/o INT. OCTROOIBUREAU B.V. Prof. Holstlaan 6
NL-5656 AA Eindhoven (NL)**

(74) Representative: **Kooiman, Josephus Johannes
Antonius et al
INTERNATIONAAL OCTROOIBUREAU B.V. Prof.
Holstlaan 6
NL-5656 AA Eindhoven (NL)**

# 0 037 130

**Description**

A. Background of the invention
A(1) Field of the invention

The invention relates to a real time signal processing apparatus for converting a set of N successive input samples of a discrete time input signal into a set of N output samples of a discrete time output signal, wherein these N output samples are representative of the N-point discrete Fourier Transform of the N input samples.

A(2) Description of the prior art.

An N-point discrete Fourier transform is a name for a special relationship between the samples of a set of N input samples $\{a(k)\}$ k=0, 1, 2, ... N−1 and an output sample z(n) of a set of N output samples $\{z(n)\}$ n=0, 1, 2, 3, ... N−1. This relationship is defined as follows:

$$z(n)=A \sum_{k=0}^{N-1} a(k)E^{kn} \qquad \qquad ....(1)$$

In this expression n may assume each of the integral numbers of the field $\{0, 1, 2, 3, ..., N-1\}$. Each quantity E and A may assume two values. In the first case the quantities may be defined by the relations:

$$E=\exp(-j2\pi/N)$$

$$A=1 \qquad \qquad ....(2)$$

In this case expression (1) is said to express in a narrower sense a discrete Fourier transform of the set of input samples $\{a(k)\}$ k=0, 1, 2, ..., N−1.

This discrete Fourier transform in the narrow sense is usually abbreviated DFT. In this case each input sample a(k) represents the amplitude of a sample of a time-continuous complex input signal which is sampled at a frequency 1/T. Each output sample z(n) then represents the amplitude and the phase of the frequency component n/(NT) of the original complex input signal.

In the second case E and A may be defined by the relations:

$$E=\exp(+j2\pi/N)$$

$$A=1/N \qquad \qquad ....(3)$$

In this case expression (1) is sometimes said to be the inverse discrete Fourier transform of the set of input samples $\{a(k)\}$ K=0, 1, 2, ... N−1. This inverse discrete Fourier transform is usually abbreviated IDFT. In this case an input sample a(k) represents the amplitude and the phase of the frequency component k/(NT) of a time-continuous complex signal which is sampled at a frequency 1/T and each output sample z(n) then represents the amplitude of such a sample.

As will be apparent from expression (1), a large number of arithmetic operations such as additions and multiplications must be carried out to convert the set of input samples $\{a(k)\}$ k=0, 1, 2, ... N−1 into an output sample z(n). When these N output samples are calculated using expression (1), a total of N2 complex multiplications and N(N−1) complex additions are required. For high values of N this means that the computation of an output sample z(n) not only takes much computational time but also requires very elaborate equipment.

Over the years a number of methods have been developed to compute such an output sample z(n). Depending on the number of arithmetic operations required, the known methods may be arranged into two categories namely the

a. the rapid methods

b. the direct methods.

The most well-known rapid methods is the so-called "Fast Fourier Transform" abbreviated FFT. This method is extensively described in References 1 and 2 (see later). A novel rapid method has been proposed more recently by Winograd. This novel method is described in Reference 3. These rapid methods require a number of arithmetic operations which is proportional to N log N. These known rapid methods however have the drawback that they are only effective when N is a number which can be written as the product of a number of integers and when all, or nearly all, the N output samples z(n) must be calculated. It should further be noted that a signal processing apparatus whose implementation is based on one of these rapid methods can only include digital circuits.

The direct methods are based upon one of the following algorithms:

— the Goertzel algorithm, which for example is described on pages 287—289 of Reference 2. An

2

arrangement whose structure is based on this Goertzel algorithm is formed by a recursive discrete filter which for practical reasons can, however, only be implemented digitally.

— the Bleustein algorithm, also called the "Chirp-z-transform"-algorithm, which for example is described on pages 321—326 of Reference 2. An arrangement whose structure is based upon this algorithm comprises a finite impulse response discrete filter (a so-called FIR-filter). Before the input samples a(k) are applied to this filter they are multiplied by a so-called chirp signal. Also the samples produced by this filter are multiplied by such a chirp signal in order to obtain the desired output samples z(n).

— the Rader algorithm, also called "prime factor" algorithm, which is described in References 4 and 5. For this algorithm it is necessary that N is a prime.

With this algorithm the set of input samples {a(k)} k=0, 1, 2, ... N−1 is divided into two groups. The first group only comprises the input sample a(0), while the second group comprises the remaining input samples {a(k)} k=1, 2, ... N−1.

For the generation of the output sample z(0) the N-input samples of the set {a(k)} k=0, 1, 2, ... N−1 are accumulated.

For the generation of the other output samples of the set {z(n)} n=1, 2, ... N−1 the input samples of the set {a(k)} k=1, 2, ... N−1 are permuted. That is to say, a set of permutation samples {b(i)} i=1, 2, ... N−1 is generated, the permutation sample b(i) being equal to the input sample a($g^i$mod N). Herein g represents a constant which is equal to a primitive root of the field consisting of the numbers 1, 2, 3, ... N−1 (see Reference 6). In accordance with this Rader algorithm, the set of permutation samples {b(i)} i=1, 2, ... N−1 thus obtained is now further converted into a set of conversion samples {y(m)} m=1, 2, ... N−1, wherein the relationship between the conversion sample y(m) and the said set of permutation samples b(i) i=1, 2, ... N−1 is defined by:

$$y(m)= \sum_{i=1}^{N-1} b(i)E^{g^{i+m}} \qquad \ldots\ldots(4)$$

When the input sample a(0) is added to a conversion sample y(m) and the sum thus obtained multiplied by the factor A, the output sample z(n)=A[y(m)+a(0)] is obtained, whose number n is defined by the expression:

$$n=g^m \bmod N \qquad \ldots\ldots(5)$$

A real time signal processing apparatus whose implementation is based upon this Rader algorithm will be referred to "Rader algorithm apparatus". It generally includes

a separation circuit receiving the set of input samples and separating therefrom the input sample a(0) to produce at an output thereof a modified set of input samples constituted by the remaining input samples a(1), a(2), ... a(N−1) of that set;

a permutation circuit receiving the modified set of input samples and generating a set of permutation samples b(1), b(2), ... b(N−1), wherein the permutation sample b(i) is equal to input sample a($g^{N-i}$mod N), wherein g is a positive integer which is equal to a primitive root of the field consisting of the numbers 1, 2, 3, ... N−1;

a conversion circuit for converting the set of permutation samples into a set of N−1 conversion samples;

an output circuit for performing a post-conversion operation on the set of conversion samples.

In the conversion circuit the operation defined in expression (4) is performed. This conversion circuit is therefore implemented as a discrete filter having a filter length N−1. The output circuit more specifically may include an adder circuit for adding the input sample a(0) to each conversion sample. It may also include a multiplier circuit for multiplying the output samples of the adder circuit with the quantity A defined in expression (3).

It is noted that this discrete filter as well as the discrete filter used in the implementation of the Bleustein algorithm can be a "sampled data filter" or a "digital filter". Definition of these terms can be found in Reference 7.

B. Object and summary of the invention

It is an object of the present invention to improve the above defined "Rader-algorithm apparatus" to provide a real time signal processing apparatus of that kind in which the number of arithmetic operations is reduced compared with that number which has to be carried out in the "Rader-algorithm apparatus".

According to the present invention the conversion circuit comprises:

adder and subtractor means for adding and subtracting selected ones of said permutation samples to produce a first and a second set of intermediate samples, said sets being respectively constituted by M first intermediate samples $b_1(q)$ and M second intermediate samples $b_2(q)$, wherein:

$$b_1(q)=b(q)+b(M+q)$$

$$b_2(q)=b(q)-b(M+q)$$

$$q=1, 2, 3, \ldots M$$

$$M=(N-1)/2$$

a first circular discrete filter circuit having an impulse response of length M, receiving the first intermediate samples for converting into a first $(N-1)/2$ conversion samples $y_1(p)$ of said set of $N-1$ conversion samples, whereby $P=1, 2, 3, \ldots M$ and

$$y_1(p)=\alpha \sum_{q=1}^{M} b_1(q)\cos(\frac{2\pi}{N}g^{1+\{(p-q)\bmod M\}}),$$

in which $\alpha$ is a constant,

a second circular discrete filter circuit having an impulse response of length M, receiving the second intermediate samples for converting into a second $(N-1)/2$ conversion samples $y_2(p)$ of said set of $N-1$ conversion samples, whereby

$$y_2(p)=j\beta \sum_{q=1}^{p} b_2(q)\sin(\frac{2\pi}{N}g^{1+\{(p-q)\bmod M\}})+$$

$$-j\beta \sum_{q=p+1}^{M} b_2(q)\sin(\frac{2\pi}{N}g^{1+\{(p-q)\bmod M\}}),$$

in which $\beta$ represents a constant and wherein $j^2=-1$.

In the thus modified Rader-algorithm apparatus the number of multiplication is reduced by at least M.


C. References

1. An Algorithm for the Machine Calculation of Complex Fourier Series; J. W. Cooley, J. W. Tukey; Mathematics of Computation, Vol. 19, No. 90, 1965, pages 297—301.

2. Digital Signal Processing; A. V. Oppenheim, R. W. Schafer; Prentice-Hall, inc, Englewood Cliffs, New Jersey 1975.

3. On computing the Discrete Fourier Transform; S. Winograd; Proceedings of the National Academy of Science U.S.A., Vol. 73, No. 4 April 1976, pages 1005—1006.

4. Discrete Fourier Transforms When the Number of Data Samples is Prime; C. M. Rader; Proceedings of the IEEE, Vol. 56, June 1968, pages 1107—1108.

5. Signal Processing with Combined CCD and Digital Techniques; The Impact of New Technologies in Signal Processing; H. J. Whitehouse, J. M. Speiser, IEE Conference Publications No. 144, pages 61—65.

6. Number Theory; J. Hunter; (University Mathematical Texts), Oliver and Boyd, London 1964.

7. Terminology in Digital Signal Processing; IEEE Transactions on Audio and Electroacoustics, Vol. AU-20, No. 5, December 1972, pages 322—337.

8. Digital Processing of Signals; B. Gold, C. M. Rader; McGraw-Hill Book Company 1969.

9. Arithmatic Operations in Digital Computers; R. K. Richards, D. Van Nostrand Company, INC, 1957.

10. The Art of Computer Programming; D. E. Knuth; Semi numerical algorithms, Vol. II, Adison Wesley Publishing Company, 1969.

11. Theory and Application of Digital Signal Processing; L. R. Rabiner, B. Gold; Prentice-Hall, inc., Englewood Cliffs, New Jersey, 1975.


D. Definitions and symbols

1. $\{e(r)\}$ $r=0, 1, 2, 3, \ldots N$, represents a set of samples wherein the sample having number r has the value $e(r)$.

2. mod N, represents the modulo N operation. Of two numbers $\xi$ and $\zeta$ it is said that they are congruent modulo N when $\xi=\zeta+\gamma N$. This will be written as: $\xi \bmod N=\zeta$. All quantities $N, \xi, \zeta, \gamma$ may be complex polynominals.

3. $j=\sqrt{-1}$.

4. A discrete signal $\{f(r)\}$ $r=-\infty, \ldots -1, 0, 1, \ldots \infty)$ is considered to be complex when each sample contains in general a real and an imaginary part, so that it holds that: $f(r)=f_1(r)+jf_2(r)$. The samples $a(k)$ and $z(n)$ will generally be complex.

E. Short description of the figures

Figure 1 shows the matrix $[E^{kn}]$ for $N=10$;

Figure 2 shows the matrix $[E^{kn}]$ for N is equal to the prime 7;

Figure 3 shows the equation (10) in the form of a matrix for the case $N=7$ and $g=3$;

Figure 4 shows the Rader algorithm apparatus whose structure is an implementation of the Rader-algorithm;

Figure 5 shows the modification of the Rader algorithm apparatus according to the invention;

Figure 6 shows an embodiment of the permuting arrangement 8, which serially produces the samples of the set $\{b(i)\}$ $i=1, 2, \ldots N-1$;

Figure 7 shows an embodiment of the permuting arrangement 27 which serially produces the samples of the set $\{z(n)\}$ $n=1, 2, \ldots N-1$;

Figure 8 shows a combination of the permuting arrangement 8 and the switching arrangement 13 of Figure 5;

Figure 9 shows an embodiment of the circular filter 9 shown in Figure 5;

Figure 10 shows an embodiment of the circular filter 20 shown in Figure 5;

Figure 11 shows a circuit in which the permuting arrangement produces the samples of the set $\{b(i)\}$ $i=1, 2, \ldots N-1$ simultaneously, and wherein the switching arrangement 13, the adder 16, the subtracter 17 and the circular filters 19 and 20 are implemented in an alternative way.

F. Description of the embodiments

F(1) Introduction

In this paragraph the basic concept of the aforementioned Rader algorithm such as it is concisely described in Reference 4 will be discussed. In the first place it should be noted that the expression (1) may alternatively be written in the following matrix form:

$$[z(n)]=A[E^{kn}] \cdot [a(k)] \qquad \ldots.(6)$$

$[z(n)]$ represents a column matrix consisting of the set of output samples $\{z(n)\}$ $n=0, 1, \ldots N-1$;

$[a(k)]$ represents a column matrix consisting of the set of input samples $\{a(k)\}$ $k=0, 1, \ldots N-1$;

$[E^{kn}]$ represents an $N \times N$ matrix consisting of the elements $E^{kn}$, more particularly n represents the number of the row and k the number of the column.

When $kn=\zeta+\gamma N$, it holds that:

$$E^{kn}=E^{\zeta+\gamma N}$$

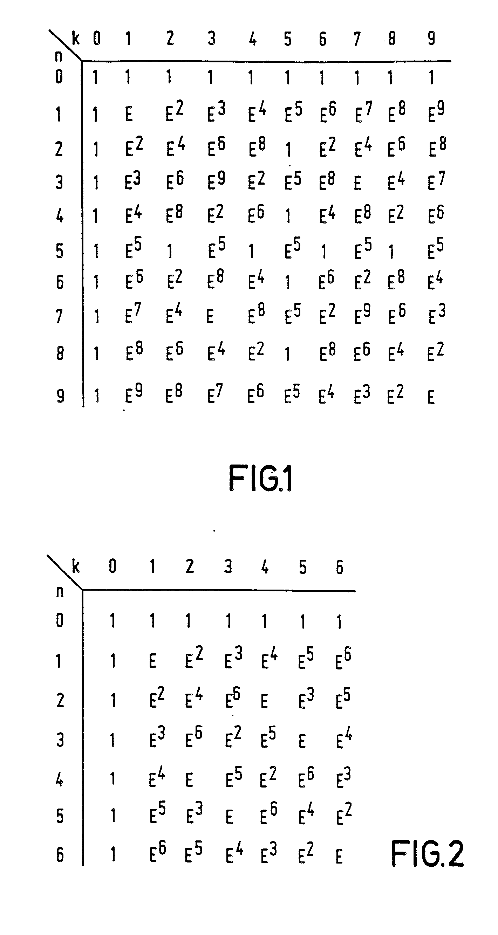

For $N=10$, this matrix $[E^{kn}]$ is shown by way of example in Figure 1. From this Figure it can be seen that not all rows contain all the possible powers of E. This is the case for the rows numbered $n=0$, $n=2$, $n=4$, $n=5$, $n=6$ and $n=8$. As can be seen from, for example, Figure 2, which shows the matrix $[E^{kn}]$ for $N=7$, each row of this matrix having a number different from $n=0$ does contain all the possible powers of E if N is a prime.

As will now be further explained, this matrix property which is associated with the fact that N is a prime renders it possible to carry out the most important part of the required computations in a perfectly advantageous manner. First it is noted that expression (1) may also be written as follows:

$$z(0)=A \sum_{k=0}^{N-1} a(k) \qquad \ldots.(7a)$$

$$z(n)-Aa(0)=A \sum_{k=1}^{N-1} a(k)E^{kn} \text{ for } n=1, 2, 3, \ldots N-1 \qquad \ldots.(7b)$$

As N is a prime, there is a number g (a so-called primitive root; see Reference 6) such that the set of numbers $i=1, 2, 3, \ldots N-1$ is unambiguously mapped onto the set $k=1, 2, 3, \ldots N-1$, this mapping being defined as follows:

$$k=g^i \bmod N \qquad \ldots.(8)$$

More particularly it then appears that:

$$N-1=g^{\frac{N-1}{2}} \bmod N \qquad \ldots.(8a)$$

As regards the primitive root g it is noted that a set of numbers may have more than one primitive root.

5

By way of example it is noted that for N=3 there is only one primitive root, namely g=2. For N=5 there are the two primitive roots g=2 and g=3, whereas for N=7 there are the two primitive roots g=3 and g=5.

When now the set of input samples {a(k)} k=1, 2, ... N−1 and the set of output samples {z(n)} n=1, 2, ... N−1 are permuted in accordance with expression (8), expression (7b) becomes:

$$z(g^m \bmod N) - Aa(0) = A \sum_{i=1}^{N-1} a(g^i \bmod N) E^{g^{m+i}} \qquad \qquad ....(9)$$

wherein m=1, 2, 3, ... N−1 or, which amounts to the same:

$$z(g^m \bmod N) - Aa(0) = A \sum_{i=1}^{N-1} a(g^{N-i} \bmod N) E^{g^{N+m-i}} \qquad ....(10)$$

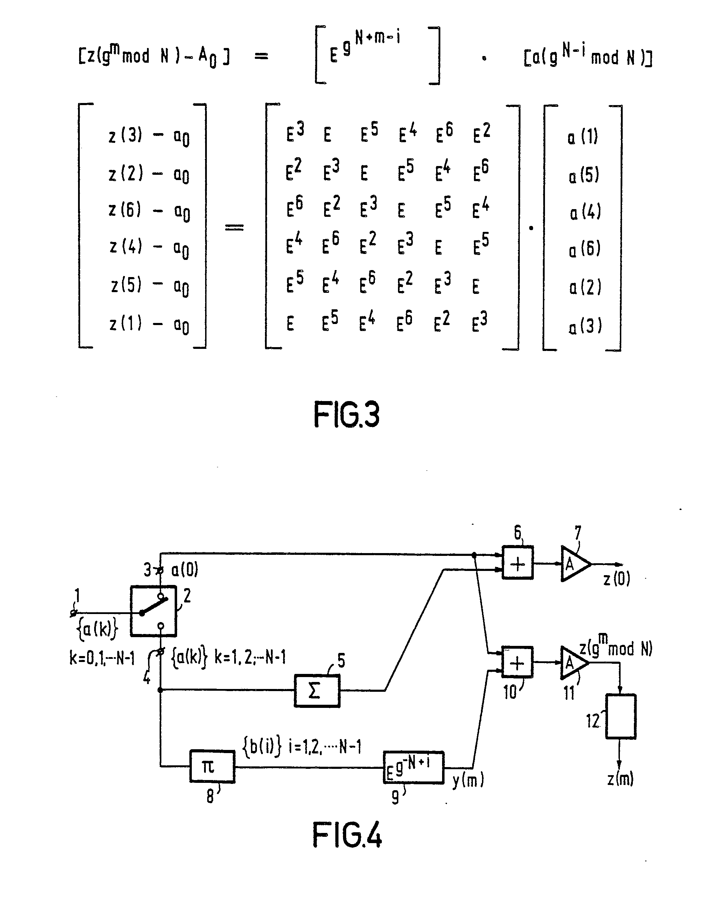

Just like expression (1), this expression (10) may also be written in matrix form, this being depicted in Figure 3, where N=7 and g=3.

As will be clear from Figure 3 the elements of a row having the number n+1 are obtained by shifting the elements of the preceding row of number n in a circular way one position to the right. Expression (10) is sometimes called a circular convolution.

The most important aspect of the Rader algorithm is that this circular convolution can be realized in a particularly simple manner by means of a non-recursive discrete circular filter having a finite impulse response of length N−1.

F(2) The Rader algorithm apparatus

Figure 4 shows schematically an embodiment of the Rader algorithm apparatus the structure of which is based on this Rader-algorithm. The arrangement shown in that Figure has an input 1 to which a set of input samples {a(k)} k=0, 1, ... N−1 is applied. It is assumed that the input samples a(k) are complex quantities and that these samples occur sequentially. These input samples are applied to a switching arrangement 2, which is shown symbolically only and which has two outputs 3 and 4. This switching arrangement 2 is controlled such that the input sample a(0) which as the first sample of the set is applied to input 1 is routed to the output 3 and that the remaining input samples of this set are routed to the output 4. The set of input samples {a(k)} k=1, 2, ... N−1, which is produced at the output 4 of the switching arrangement 2 is applied to an accumulator 5, which accumulates the input samples of this set. In adder 6 the sum produced by the accumulator 5 is increased by a(0) and the sum thus obtained is multiplied by the factor A in a multiplier 7. At the output of this multiplier 7 the output sample z(0) defined in expression (7a) is produced.

The set of input samples produced at output 4 of the switching arrangement 2 is not only applied to accumulator 5 but also to a permuting arrangement 8. This permuting arrangement 8 changes the order of occurrence of the input samples a(k) within the set {a(k)} k=1, 2, ... N−1 and produces a set of permutation samples {b(i)} i=1, 2, ... N−1. It will be assumed here that these permutation samples b(i) also occur sequentially. The operation of this permuting arrangement 8 is such that for each permutation sample b(i) it holds that

$$b(i) = a(g^{N-i} \bmod N)$$

The permutation samples b(i) thus obtained are then applied to a circular non-recursive discrete filter 9, having the finite impulse response $h(i) = Eg^{-N+i}$. This filter 9 produces the conversion samples $z(g^m \bmod N) - Aa(0)$ defined in expression (10). In an adder 10, each conversion sample is augmented by a(0) and the sum thus obtained is multiplied in a multiplier 11 by the factor A, to achieve each output sample $z(g^m \bmod N)$. This last output sample may optionally be applied to a second permuting arrangement 12 to be placed in the desired (proper!) sequence together with the other output samples produced by the multiplying arrangement 11.

F(3) A modification of the Rader algorithm

As mentioned in the foregoing, expression (10) represents a circular convolution. With the following identities

$$y(m) = (z(g^m \bmod N) - Aa(0))/A$$

$$b(i) = a(g^{N-i} \bmod N) \qquad \qquad ....(11)$$

$$h(v) = E^{g^v} \quad \text{where } v=1, 2, ... N-1$$

expression (10) may be written in the circular convolution form shown in paragraph 6.2 of Reference 8 (pages 166 and 167 in particular). More particularly, expression (10) then changes into

$$y(m)= \sum_{i=1}^{N-1} b(i)\ h(1+\{(m-i)\ \text{mod}(N-1)\}) \qquad \ldots\ldots(12)$$

This expression (12) is known from polynominal theory (see, for example, Reference 10). This theory teaches the following: Let the conversion samples $y(m)$ represent the coefficients of a polynominal $Y(u)$ for which it holds that:

$$Y(u)= \sum_{m=1}^{N-1} y(m)u^{m-1} \qquad \ldots\ldots(13)$$

Let further the permutation samples $b(i)$ represent the coefficients of a polynominal $B(u)$ for which it holds that:

$$B(u)= \sum_{i=1}^{N-1} b(i)u^{i-1} \qquad \ldots\ldots(14)$$

and let in a corresponding manner the filter coefficients $h(v)$ represent the coefficients of a polynominal $H(u)$ for which it holds that:

$$H(u)= \sum_{v=1}^{N-1} h(v)u^{v-1} \qquad \ldots\ldots(15)$$

then it can be proven (see also Reference 10) that when the coefficients $y(m)$ are defined by expression (12) it then holds that

$$Y(u)=B(u)H(u)\ \text{mod}\ (u^{N-1}-1) \qquad \ldots\ldots(16)$$

Since N is a prime, it holds that $N-1$ is an even number, so that:

$$(u^{N-1}-1)=(u^{M}-1)(u^{M}+1)$$

$$M=(N-1)/2 \qquad \ldots\ldots(17)$$

Using the Chinese remainder theorem (see Reference 6) it can be verified that expression (16) may be written in the form:

$$Y(u)=\tfrac{1}{2}\{B_1(u)H_1(u)\ \text{mod}(u^M-1)\}\ (u^M+1)+$$

$$-\tfrac{1}{2}\{B_2(u)H_2(u)\ \text{mod}(u^M+1)\}\ (u^M-1) \qquad \ldots\ldots(18)$$

wherein

$$B_1(u)=B(u)\ \text{mod}(u^M-1)= \sum_{q=1}^{M} b_1(q)u^{q-1}$$

$$B_2(u)=B(u)\ \text{mod}(u^M+1)= \sum_{q=1}^{M} b_2(q)u^{q-1} \qquad \ldots\ldots(19a)$$

$$H_1(u)=H(u)\ \text{mod}(u^M-1)= \sum_{r=1}^{M} h_1(r)u^{r-1}$$

$$H_2(u)=H(u)\ \text{mod}(u^M+1)= \sum_{r=1}^{M} h_2(r)u^{r-1} \qquad \ldots\ldots(19b)$$

From these expressions (19a) and (19b) it can now be derived that:

$$b_1(q)=b(q)+b(M+q)$$

$$b_2(q)=b(q)-b(M+q)$$

$$h_1(r)=h(r)+h(M+r) \qquad \ldots.(20)$$

$$h_2(r)=h(r)-h(M+r)$$

$$\text{for } r, q=1, 2, 3, \ldots M$$

In expression (20) it is indicated that the coefficients of the polynominals $B_1(u)$ and $B_2(u)$ are linear combinations of the original, permuted input samples. Also the coefficients of the polynominals $H_1(u)$ and $H_2(u)$ are linear combinations of the original filter coefficients. As from expression (11) it follows that:

$$h(r)=E^{g^r} \qquad \ldots.(21)$$

then it holds that:

$$h(M+r)=E^{g^{M+r}} \qquad \ldots.(22)$$

Using the expressions (8a), (21) and (22) it follows from (20) that, for $E=\exp(-j2\pi/N)$,

$$h_1(r)=2 \cos (2\pi g^r/N)$$

$$h_2(r)=-2j \sin (2\pi g^r/N) \qquad \ldots.(23)$$

and that for $E=\exp(+2j\pi/N)$,

$$h_1(r)=2 \cos (2\pi g^r/N)$$

$$h_2(r)=+2j \sin (2\pi g^r/N) \qquad \ldots.(23a)$$

Stating that:

$$Y_1(u)=B_1(u)H_1(u) \ \mathrm{mod}(u^M-1)= \sum_{p=1}^{M} y_1(o)u^{p-1}$$

$$Y_2(u)=B_2(u)H_2(u) \ \mathrm{mod}(u^M+1)= \sum_{p=1}^{M} y_2(p)u^{p-1} \qquad \ldots.(24)$$

then it follows from (18) that:

$$Y(u)=\tfrac{1}{2}(u^M+1) \ Y_1(u)+-\tfrac{1}{2}(u^M-1) \ Y_2(u) \qquad \ldots.(25)$$

From the above it follows that the coefficients $y_1(p)$ of polynominal $Y_1(u)$ are obtained from the circular convolution:

$$y_1(p)= \sum_{q=1}^{M} b_1(q)h_1(1+\{(p-q) \ \mathrm{mod} \ M\}) \qquad \ldots.(26)$$

By substituting herein for $h_1(r)$ the values defined in (23) and (23a) then (26) becomes:

$$y_1(p)= \sum_{q=1}^{M} 2b_1(q) \cos(\frac{2\pi}{N}g^{1+\{(p-q) \ \mathrm{mod} \ M\}}) \qquad \ldots.(26a)$$

It can now further be verified that the coefficients $y_2(p)$ of $Y_2(u)$ follows from the equation:

$$y_2(p) = \sum_{q=1}^{p} b_2(q)\, h_2(1 + \{(p-q) \bmod M\}) +$$

$$- \sum_{q=p+1}^{M} b_2(q)\, h_2(1 + \{(p-q) \bmod M\}) \qquad \dots(27)$$

As well as expression (26) this expression (27) also describes a circular convolution in which, however, the polarity of those intermediate samples $b_2(q)$ whose number is larger than or equal to $p+1$ must be inverted.

From (24) and (25) it now further follows that it holds that the coefficients of $Y(u)$ satisfy the following expressions:

$$y(p) = \tfrac{1}{2}\{y_1(p) - y_2(p)\}$$

$$y(M+p) = \tfrac{1}{2}\{y_1(p) + y_2(p)\} \qquad \dots(28)$$

$$\text{for } p = 1, 2, 3, \dots M$$

From equation (12) it will be clear that the circular convolution to be calculated in accordance with the Rader-algorithm requires $N-1$ complex permutation samples $b(i)$ and $N-1$ complex filter coefficients.

In the method proposed here two circular convolutions are used which now, however, each require $(N-1)/2$ complex intermediate samples $b_1(q)$ and $b_2(q)$, respectively, and $(N-1)/2$ filter coefficients which however are either purely real or purely imaginary.

F(4) A modified Rader algorithm apparatus

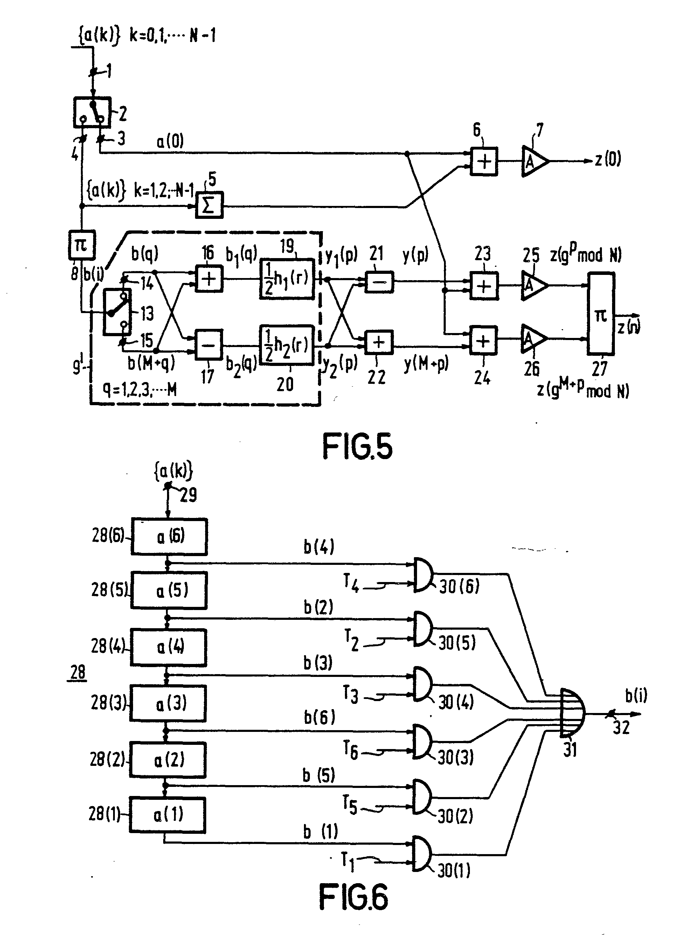

An apparatus whose implementation is based on the above described method, is schematically shown in Figure 5. The arrangement shown there is implemented to a very great extent in the same manner as the arrangement shown in Figure 4. In the arrangement of Figure 5 the permutation samples $b(i)$ produced by the permuting arrangement 8 are, however, processed in a completely different way than in the arrangement of Figure 4. The arrangement shown in Figure 5 comprises a conversion arrangement 9' including a switching arrangement 13, shown symbolically only, which has two outputs denoted 14 and 15, respectively. Both outputs 14 and 15 are connected to inputs of an adder 16 and inputs of a subtracter 17. Adder 16 produces the intermediate samples $b_1(q)$ defined in expression (20) and subtracter 17 produces the intermediate samples $b_2(q)$, which are also defined in expression (20). The intermediate samples $b_1(q)$ are applied to a circular non-recursive discrete filter 19 having the impulse response $\tfrac{1}{2}h_1(r)$ of length $M = (N-1)/2$. The intermediate samples $b_2(q)$ are applied to a circular non-recursive discrete filter 20 having the impulse response $\tfrac{1}{2}h_2(r)$ of length M. These impulse responses $h_1(r)$ and $h_2(r)$ are defined by either expression (23) or expression (23a). Filter 19 produces the conversion samples $y_1(p)$ defined in expression (26) or (26a), and the filter 20 produces the conversion samples $y_2(p)$ defined in expression (27). The conversion samples $y_1(p)$ and $y_2(p)$ thus obtained are applied to an output circuit and more specifically to both a subtracter 21 and an adder 22, which produce the samples $y(p)$ and $y(M+p)$, respectively, in accordance with expression (28). The last-mentioned samples are augmented by $a(0)$ in adders 23 and 24, respectively. The sums thus obtained are multiplied by the factor A in the multipliers 25 and 26, respectively, resulting in the output samples $z(g^p \bmod N)$ and $z(g^{M/p} \bmod N)$. Just as described for the arrangement shown in Figure 4, the output samples produced by the multipliers can be placed in the desired (proper!) sequence by means of the second permuting arrangement 27.

F(5) Detailed embodiments of some components
F(5.1.) The permuting arrangements 8 and 27

Figure 6 shows an embodiment of the permuting arrangement 8, to which the input samples of the set $\{a(k)\}$ $k = 1, \dots N$, are applied sequentially and which produces the permutation samples of the set $\{b(i)\}$ $i = 1, 2, \dots N-1$, also sequentially. In this embodiment it is assumed that $N = 7$ and that $g = 3$. This permuting arrangement comprises a shift register 28 including six shift register elements 28(1)—28(6), which are each arranged for storing an input sample $a(k)$. This shift register has an input 29, which is connected to the output 4 of the switching arrangement 2 of Figure 5. The outputs of the shift register elements 28( . ) are connected in the way shown in the Figure to the output 32 of the permuting arrangement through AND-gate circuits 30( . ) and an OR-gate circuit 31. These AND-gate circuits 30( . ) receive control pulses $T_1$, $T_2, \dots T_6$, which are each produced a period $T_0$ after one another and which can be generated in a way as described in, for example, Reference 9 on pages 75 and 76. More particularly it holds that when the control pulse $T_1$ occurs at an instant $t_0$ then control pulse $T_2$ occurs at an instant $t_0 + T_0$ and $T_3$ at an instant $t_0 + 2T_0$

etc. With this mode of control it is achieved that at the output 32 of this permuting arrangement is produced:

$b(1)=a(1)$ at instant $t_0$;
$b(2)=a(5)$ at the instant $t_0+T_0$;
$b(3)=a(4)$ at the instant $t_0+2T_0$;
$b(4)=a(6)$ at the instant $t_0+3T_0$;
$b(5)=a(2)$ at the instant $t_0+4T_0$;
$b(6)=a(3)$ at the instant $t_0+5T_0$.

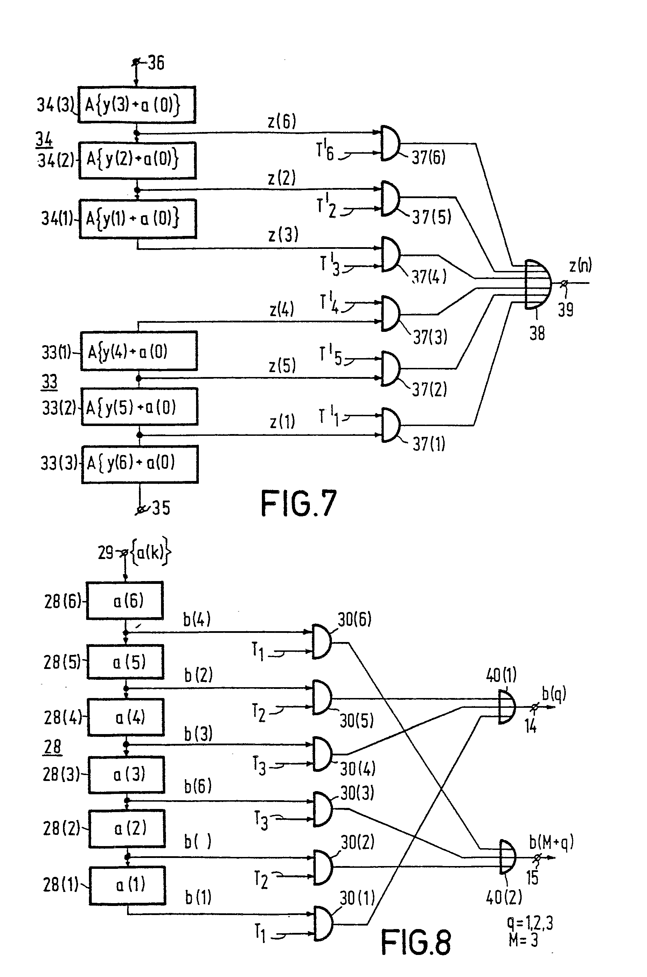

The permuting arrangement 27 may be implemented in a manner which largely corresponds to the permuting arrangement shown in Figure 6. An embodiment of this permuting arrangement 27 is shown in Figure 7. It is again assumed that $N=7$ and $g=3$ and that the output sample $z(n)$ of the set $\{z(n)\}$ $n=1, 2, \ldots$ $N-1$ occur sequentially. This permuting arrangement 27 comprises two shift register 33 and 34, each including three shift register elements 33(1)—33(3) and 34(1)—34(3), respectively, each of these shift register elements being arranged for storing an output sample $A\{y(m)+a(0)\}$. Shift register 33 has an input 35 connected to the output of multiplier 26. Shift register 34 has an input 36, connected to the output of the multiplier 25. As shown in the Figure, the outputs of the shift register elements 33( . ) and 34( . ) are connected to the output 39 of the permuting arrangement through AND-gate circuits 37( . ) and an OR-gate circuit 38. Control pulses $T'_1$, $T'_2 \ldots T'_6$ which each occur a period $T'_0$ after one another are now applied to the AND-gate circuits 37( . ). When control pulse $T'_1$ occur at instant $t'_0$, then $T'_2$ occurs at instant $t'_0+T'_0$ and $T'_3$ at instant $t'_0+2T'_0$, etc. Also these control pulses may be generated in the way described in Reference 9. With this mode of control it is achieved that at the output 39 of this permuting arrangement there is produced:

$z(1)=A\{y(6)+a(0)\}$ at the instant $t'_0$
$z(2)=A\{y(2)+a(0)\}$ at the instant $t'_0+T'_0$
$z(3)=A\{y(1)+a(0)\}$ at the instant $t'_0+2T'_0$
$z(4)=A\{y(4)+a(0)\}$ at the instant $t'_0+3T'_0$
$z(5)=A\{y(5)+a(0)\}$ at the instant $t'_0+4T'_0$
$z(6)=A\{y(3)+a(0)\}$ at the instant $t'_0+5T'_0$

In practice, it is advantageous to combine the function of the permuting arrangement 8 and the function of the switching arrangement 13; for example in the way shown in greater detail in Figure 8. This combined permuting-switching arrangement, shown in Figure 8, is implemented to a very great extent in the same manner as the permuting arrangement shown in Figure 6. Elements in Figure 8 corresponding to elements in Figure 6 have the same reference numerals as in Figure 6. The arrangement shown in Figure 8 differs from the arrangement shown in Figure 6 in the following respects:

— The combined permuting-switching arrangement comprises two OR-gate circuits 40(1) and 40(2), whose outputs correspond to the outputs 14 and 15, respectively, of the switching arrangement 13 of Figure 5. Inputs of OR-gate circuit 40(1) are connected to outputs of the AND-gate circuits 30(1), 30(4), 30(5), while inputs of OR-gate circuit 40(2) are connected to outputs of the AND-gate circuits 30(2), 30(3), 30(6).

— With this combined permuting-switching arrangement the AND-gate circuits 30( . ) are controlled only by the three control signals $T_1$, $T_2$, $T_3$, $T_1$ being applied to the AND-gate circuits 30(1) and 30(6), $T_2$ being applied to the AND-gate circuits 30(2) and 30(5), and $T_3$ being applied to the AND-gate circuits 30(3) and 30(4). This mode of control results in that the permutation sample $b(q)$ appears at output 14 and simultaneously therewith the permutation sample $b(M+q)$ at the output 15.

It should be noted that a permuting arrangement may also be realized by means of a RAM (random access memory). The samples applied to this RAM are then entered in storage locations which are addressed by a counter. The address code required to read the samples may be generated by a ROM.

A permuting arrangement which is particularly suitable for processing "sampled data" signals is described in detail in Reference 5.

F(5.2) The circular filters 19 and 20

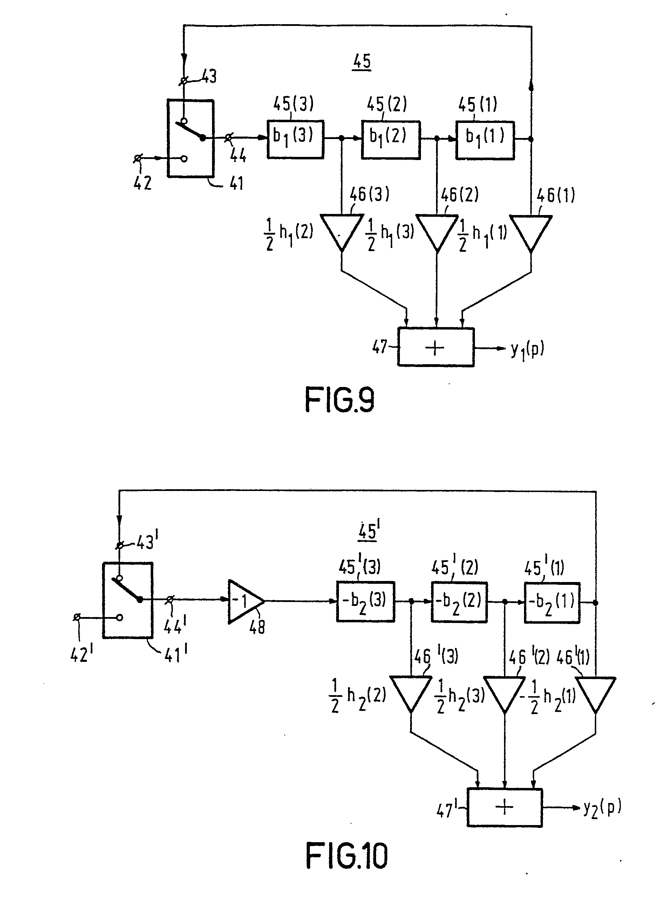

An embodiment of the circular filter 19 is shown in greater detail in Figure 9. The discrete filter shown there is in the form of a transversal filter and comprises a switching arrangement 41, shown symbolically having an input 42 and an input 43 as well as an output 44. The input 42 is connected to the output of the adder 16. A shift register 45 which, in the case considered here for $N=7$ and $g=3$, comprises three shift register elements 45( . ), each arranged for storing an intermediate sample $b_1(q)$, is connected to the output 44. Via a multiplier 46( . ) having the fixed filter coefficients $\frac{1}{2}h_1( . )$, the output of each shift register element 45( . ) is connected to an input of an adder 47, which thus produces the desired conversion sample $y_1(p)$. The circular character of this filter is obtained in that the output of the shift register element 45(1) is also connected to the input 43 of the switching arrangement 41.

The filter shown in Figure 9 operates as follows. At an instant $t_0-\tau$, in which $\tau$ is much smaller than the period $T_0$ defined in paragraph F(5.1.), the output 44 of switching arrangement 41 is connected to its input 42. At the instant $t_0$ the intermediate sample $b_1(1)$ is applied to this input, and written into the shift register element 45(3). At the instant $t_0+2T_0$ the intermediate sample $b_1(2)$ is applied to input 42 and written into the shift register element 45(3), while simultaneously intermediate sample $b_1(1)$ is shifted to the shift register element 45(2). At the instant $t_0 + T_0$ intermediate sample $b_1(3)$ is applied to the input 42 and written into the shift register element 45(3) while simultaneously intermediate sample $b_1(2)$ is shifted to the shift register element 45(2) and intermediate sample $b_1(1)$ to the shift register element 45(1). The intermediate samples stored thus, are now multiplied in a manner customary for transversal filters by the associated filter coefficients $\frac{1}{2}h_1(1)$, $\frac{1}{2}h_1(3)$ and $\frac{1}{2}h_1(2)$ and the products obtained are accumulated in adder 47. The content of the shift register 45 being as shown in the Figure, the adder 47 produces the conversion sample $y_1(1)$.

At an instant located between the instant at which intermediate sample $b_1(3)$ is written into the shift register 45 and the instant at which the above-mentioned conversion sample $y_1(1)$ is produced, the output 44 of the switching arrangement 41 is connected to its input 43. After the adder 47 has produced conversion sample $y_1(1)$ the content of the shift register 45 is shifted one position to the right, causing $b_1(1)$ to be stored in the element 45(3), $b_1(3)$ to be stored in the element 45(2) and $b_1(2)$ to be stored in the element 45(1). With the intermediate samples stored thus, the adder 47 produces conversion sample $y_1(2)$. Thereafter the content of the shift register 45 is again shifted one position to the right, thus causing $b_1(3)$ to be stored in shift register element 45(1), $b_1(1)$ to be stored in shift register element 45(2) and $b_1(2)$ to be stored in shift register element 45(3). With the intermediate samples stored thus the adder 47 produces conversion sample $y_1(3)$. This operation is then repeated, but now with a new set of three intermediate samples $\{b_1(q)\}$ $q = 4, 5, 6$.

The circular filter 20, which has the impulse response $\frac{1}{2}h_2(r)$ and which produces conversion samples $y_2(p)$ defined in expression (27), may be implemented in substantially the same manner as the circular filter 19. Figure 10 shows an embodiment of this circular filter 20, which is implemented to a very great extent in a similar way as the circular filter shown in Figure 9. In Figure 10 elements corresponding to elements already shown in Figure 9 have been given the same reference numerals as in Figure 9, now however provided with an accent notation. The circular filter shown in Figure 10 differs from the filter shown in Figure 9 in that the output 44' of the switching arrangement 41' is connected to the input of shift register 45' through a multiplying device 48. This multiplying device 48 has the constant multiplication factor $-1$. Further, the multiplication factor of the multiplier 46'(1) is now equal to $\frac{1}{2}h_2(1)$, that of multiplier 46'(2) to $\frac{1}{2}h_2(3)$ and that of the multiplier 46'(3) is equal to $\frac{1}{2}h_2(2)$.

F(5.3.) An alternative structure

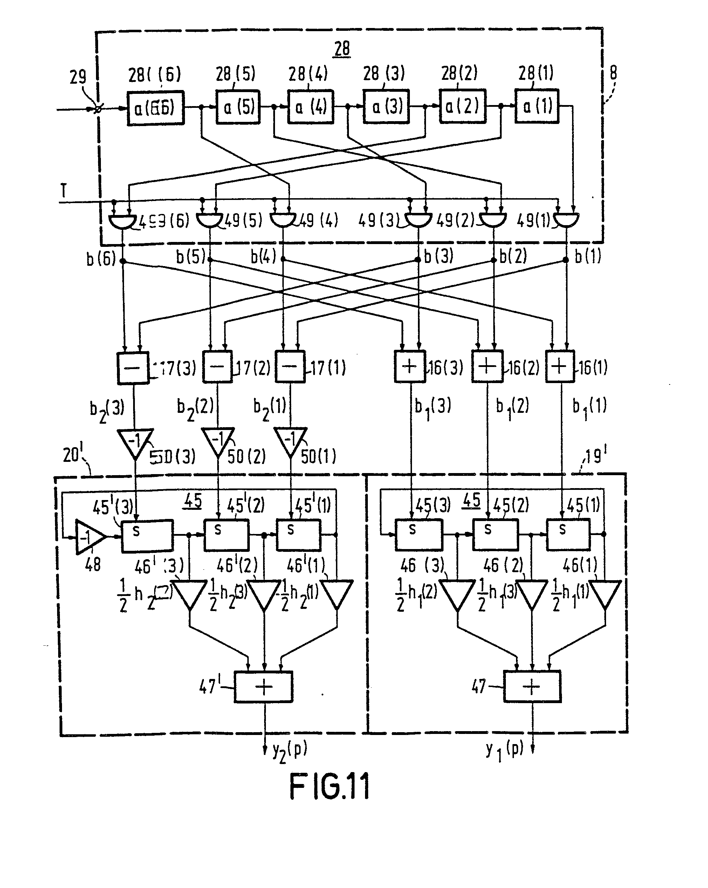

The embodiments described in paragraph F(5.1) are based on the assumption that the permutation samples $b(i)$ are sequentially produced by the permuting arrangement. If it is allowed that the permuting arrangement produces all permutation samples $b(i)$ of the set $\{b(i)\}$ $i = 1, 2, \ldots N-1$ simultaneously (and therefore in parallel form) then the function of the permuting arrangement 8, the switching arrangement 13 the adder 16, the subtracter 17, the circular filter 19 and the circular filter 20 can be realized by means of the circuit arrangement which is shown schematically in Figure 11. Herein, the permuting arrangement 8 is again formed by the shift register 28 having the shift register elements 28( . ). The input 29 of this shift register is again connected to the output 4 of switching arrangement 2 (see Figure 5). The outputs of the shift register elements 28( . ) are connected in the way shown in the Figure to inputs of AND-gate circuits 49( . ). These AND-gate circuits all receive simultaneously a control pulse T at an instant $t_0$, in response to which they produce the set of permutation samples $\{b(i)\}$ $i = 1, 2, \ldots N-1$. The permutation samples $b(i)$ which are then simultaneously available are applied in the way shown in the Figure to the three subtracters 17( . ) and the three adders 16( . ), which produce the set of intermediate samples $\{b_2(q)\}$ $q = 1, 2, 3$ and $\{b_1(q)\}$ $q = 1, 2, 3$, respectively. The set of intermediate samples $b_1(q)$ is directly applied to the circular filter 19', which is predominantly implemented in the way shown in Figure 9. Via multipliers 50( . ), each having a multiplication factor $-1$ the set of intermediate samples $\{b_2(q)\}$ is applied to the circular filter 20', which is predominantly implemented in the way shown in Figure 10. For the circular filters 19' and 20' shown in Figure 11 the shift register elements 45( . ) and 45'( . ) are of the type having a preset input S (alternatively denoted Set-input) via which a sample can be written into the shift register element.

It should be noted that the filters 19 and 20 and also 19' and 20' may alternatively be implemented in the way which is extensively described on pages 541—556 of Reference 11.

It should also be noted that when all the input samples $a(k)$ are real, then $y_1(p)$ form the real and $y_2(p)$ forms the imaginary part of $y(p)$ and $y(M+p)$, so that for example the subtracter 21 and the adder 22 may be omitted. Also the adders 23 and 24 can now be simplified as $a(0)$ needs only be added to the real conversion sample $y_1(p)$.

In practice it will, however, frequently be the case that the adders 23 and 24 are completely absent, as the addition of $a(0)$ to $y(p)$ and $y(M+p)$ introduces only a, in many cases uninteresting, level shift so that in practice there is often only an interest to known the quantity $z(n) - Aa(0)$.

In practice the discrete Fourier transform is often used for spectrum analysis. This results in that in practice there is no need to known $z(n)$ or, possibly $z(n) - Aa(0)$, but only to known the square of the modulus of $z(n)$ or $z(n) - Aa(0)$. When all input samples $a(k)$ are real, this means that there is only an interest in the square of the modulus of $y_1(p)$ increased by the square of the modulus of $y_2(p)$, so that the elements 21 to 27 may be dispensed with.

**0 037 130**

**Claim**

A real time signal processing apparatus for converting a set of N successive input samples $a(0)$, $a(1)$, $a(2)$, ... $a(N-1)$ of a discrete time input signal into a set of N output samples of a discrete time output signal, wherein these N output samples are representative of the N-point discrete Fourier Transform of the set of N input samples, and wherein N is a prime, comprising:

a separation circuit (2) receiving the input samples of said set and separating therefrom the sample $a(0)$ to produce at an output thereof a modified set of input samples constituted by the remaining input samples $a(1)$, $a(2)$, ... $a(N-1)$ of that set;

a permutation circuit (8) receiving the modified set of input samples and generating a set of permutation samples $b(1)$, $b(2)$, ... $b(N-1)$, wherein the permutation sample $b(i)$ is equal to input sample $a(g^{N-i} \bmod N)$, wherein g is a positive integer which is equal to a primitive root of the field consisting of the numbers 1, 2, 3, ... $N-1$;

A conversion circuit (9) for converting the set of permutation samples into a set of $N-1$ conversion samples;

an output circuit (21—27) for performing a post-conversion operation on the set of conversion samples;

characterized in that the conversion circuit (9) comprises:

adder and subtractor means (16, 17) for adding and subtracting selected ones of said permutation samples to produce a first and second set of intermediate samples, said sets being respectively constituted by M first intermediate samples $b_1(q)$ and M second intermediate samples $b_2(q)$, wherein:

$$b_1(q) = b(q) + b(M+q)$$

$$b_2(q) = b(q) - b(M+q)$$

$$q = 1, 2, 3, \ldots M$$

$$M = (N-1)/2$$

a first circular discrete filter circuit (19) having an impulse response of length M, receiving the first intermediate samples for converting into a first $(N-1)/2$ conversion samples $y_1(p)$ of said set of $N-1$ conversion samples, whereby $p = 1, 2, 3, \ldots M$, and:

$$y_1(p) = \alpha \sum_{q=1}^{M} b_1(q) \cos\left(\frac{2\pi}{N} g^{1+[(p-q) \bmod M]}\right)$$

and $\alpha$ is a constant

a second circular discrete filter circuit (20) having an impulse response of length M, receiving the second intermediate samples for converting into a second $(N-1)/2$ conversion samples $y_2(p)$ of said set of $N-1$ conversion samples, whereby:

$$y_2(p) = j\beta \sum_{q=1}^{p} b_2(q) \sin\left(\frac{2\pi}{N} g^{1+[(p-q) \bmod M]}\right) +$$

$$-j\beta \sum_{q=p+1}^{M} b_2(q) \sin\left(\frac{2\pi}{N} g^{1+[(p-q) \bmod M]}\right)$$

and in which $\beta$ is a constant while $j^2 = -1$.

**Patentanspruch**

Echtzeit-Signalverarbeitungseinrichtung zum Umwandeln einer Gruppe von N aufeinanderfolgenden Eingangsabtastwerten $a(0)$, $a(1)$, $a(2)$, ... $a(N-1)$ eines zeitdiskreten Eingangssignals in eine Gruppe von N-Ausgangsabtastwerten eines zeitdiskreten Ausgangssignals, wobei diese N-Ausgangsabtastwerte die N-Punkt-diskrete Fourier-Transformation der Gruppe von N-Eingangsabtastwerten darstellen und wobei N eine Primzahl ist, wobei die Einrichtung die folgenden Elemente aufweist:

eine Trennschaltung (2), welche die Eingangsabtastwerte der genannten Gruppe empfängt und von diesen den Abtastwerte $a(0)$ abtrennt, um an einem Ausgang derselben eine modifizierte Gruppe von Eingangsabtastwerten zu erzeugen, die durch die übrigen Eingangsabtastwerte $a(1)$, $a(2)$, ... $a(N-1)$ der genannten Gruppe gebildet werden;

eine Permutationsschaltung (8), welche die modifizierte Gruppe von Eingangsabtastwerten empfängt

12

und eine Gruppe von Permutationsabtastwerten b(1), b(2), ... b(N−1) erzeugt, wobei der Permutationsabtastwert b(i) dem Eingangsabtastwert $a(g^{N-i} \bmod N)$ entspricht, wobei g eine positive ganze Zahl ist, die einer Primitivwurzel der Gruppe, die aus den Zahlen 1, 2, 3, ... N−1 besteht, entspricht;

eine Umwandlungsschaltung (9) zum Umwandeln der Gruppe von Permutationsabtastwerten in eine Gruppe von N−1 Umwandlungsabtastwerten;

eine Ausgangsschaltung (21—27) zum Durchführen eines Nachumwandlungsvorganges an der Gruppe von Umwandlungsabtastwerten; dadurch gekennzeichnet, dass die Umwandlungsschaltung (9) die folgenden Elemente aufweist:

Addier- und Subtrahiermittel (16, 17) zum Addieren und Subtrahieren ausgewählter Permutationsabtastwerte zum Erzeugen einer ersten und einer zweiten Gruppe von Zwischenabtastwerten, wobei die genannten Gruppen durch M erste Zwischenabtastwerte $b_1(q)$ bzw. M zweite Zwischenabtastwerte $b_2(q)$ gebildet werden, wobei

$$b_1(q) = b(q) + b(M+q)$$

$$b_2(q) = b(q) - b(M+q)$$

$$q = 1, 2, 3, \ldots M$$

$$M = (N-1)/2,$$

eine erste diskrete Umlauffilterschaltung (19) mit einer Impulsstossantwort mit einer Länge M, wobei diese Schaltunganordnung die ersten Zwischenabtastwerte zur Umwandlung in erste (N−1)/2 Umwandlungsabtastwerte $Y_1(p)$ der genannten Gruppe von N−1 Umwandlungsabtastwerten empfängt, wobei p=1, 2, 3, ... M, und:

$$y_1(p) = \alpha \sum_{q=1}^{M} b_1(q) \cos\left(\frac{2\pi}{N} g^{1+\{(p-q) \bmod M\}}\right)$$

und α eine Konstante ist,

eine zweite diskrete Umlauffilterschaltung (20) mit einer Impulsstossantwort mit einer Länge M, wobei diese Schaltungsanordnung die zweiten Zwischenabtastwerte zur Umwandlung in zweite (N−1)/2 Umwandlungsabtastwerte $Y_2(p)$ der genannten Gruppe von N−1 Umwandlungsabtastwerten empfängt, wobei:

$$y_2(p) = j\beta \sum_{q=1}^{p} b_2(q) \sin\left(\frac{2\pi}{N} g^{1+\{(p-q) \bmod M\}}\right) +$$

$$-j\beta \sum_{q=p+1}^{M} b_2(q) \sin\left(\frac{2\pi}{N} g^{1+\{(p-q) \bmod M\}}\right)$$

und wobei β eine Konstante ist, während $j^2 = -1$ ist.

**Revendication**

Appareil de traitement de signaux en temps réel destiné à convertir un jeu de N échantillons d'entrée successifs a(0), a(1), å(2), ..., a(N−1) d'un signal d'entrée en temps discret en un jeu de N échantillons de sortie d'un signal de sortie en temps discret, dans lequel ces N échantillons de sortie sont représentatifs de la transformée de Fourier discrète de N points du jeu de N échantillons d'entrée et dans lequel N est un nombre premier, comprenant:

un circuit de séparation (2) recevant les échantillons d'entrée du jeu et en séparant l'échantillon a(0) pour produire à l'une de ses sorties un jeu modifié d'échantillons d'entrée constitué par les échantillons d'entrée restants a(1), a(2), ..., a(N−1) de ce jeu;

un circuit de permutation (8) recevant le jeu modifié d'échantillons d'entrée et produisant un jeu d'échantillons de permutation b(1), b(2), ... b(N−1), dans lequel l'échantillon de permutation b(i) est égal à l'échantillon d'entrée $a(g^{N-i} \bmod N)$, où g est un nombre entier positif qui est égal à une racine primitive du champ formé des nombres 1, 2, 3, ..., N−1;

un circuit de conversion (9) pour convertir le jeu d'échantillons de permutation en un jeu de N−1 échantillons de conversion;

un circuit de sortie (21—27) pour exécuter une opération de postconversion sur le jeu d'échantillons de conversion;

caractérisé en ce que le circuit de conversion (9) comprend:

13

un additionneur et un soustracteur (16, 17) pour additionner et soustraire des échantillons de permutation choisis afin de produire un premier et un second jeu d'échantillons intermédiaires, les jeux étant constitués respectivement par M premiers échantillons intermédiaires $b_1(q)$ et M seconds échantillons intermédiaires $b_2(q)$, où:

$$b_1(q)=b(q)+b(M+q)$$

$$b_2(q)=b(q)-b(M+q)$$

$$q=1, 2, 3, \ldots, M$$

$$M=(N-1)/2$$

un premier circuit de filtre discret circulaire (19) présentant une réponse impulsionnelle d'une longueur M, recevant les premiers échantillons intermédiaires à convertir en une première série de $(N-1)/2$ échantillons de conversion $y_1(p)$ du jeu de $N-1$ échantillons de conversion, où $p=1, 2, 3, \ldots, M$, et

$$y_1(p)=\alpha \sum_{q=1}^{M} b_1(q) \cos(\frac{2\pi}{N}g^{1+\{(p\cdot 1+\{(p-q)\bmod M\}})$$

et $\alpha$ est une constante,

un second circuit de filtre discret circulaire (20) présentant une réponse impulsionnelle de longueur M, recevant les seconds échantillons intermédiaires à convertir en une seconde série de $(N-1)/2$ échantillons de conversion $y_2(p)$ du jeu de $N-1$ échantillons de conversion, où:

$$y_2(p)=j\beta \sum_{q=1}^{p} b_2(q) \sin(\frac{2\pi}{N}g^{1+\{(p-q)\bmod M\}})+$$

$$-j\beta \sum_{q=p+1}^{M} b_2(q) \sin(\frac{2\pi}{N}g^{1+\{(p-q)\bmod M\}})$$

où $\beta$ représente une constante et où $j^2=-1$.

| n\k | 0 | 1 | 2 | 3 | 4 | 5 | 6 | 7 | 8 | 9 |
|---|---|---|---|---|---|---|---|---|---|---|
| 0 | 1 | 1 | 1 | 1 | 1 | 1 | 1 | 1 | 1 | 1 |
| 1 | 1 | $E$ | $E^2$ | $E^3$ | $E^4$ | $E^5$ | $E^6$ | $E^7$ | $E^8$ | $E^9$ |
| 2 | 1 | $E^2$ | $E^4$ | $E^6$ | $E^8$ | 1 | $E^2$ | $E^4$ | $E^6$ | $E^8$ |
| 3 | 1 | $E^3$ | $E^6$ | $E^9$ | $E^2$ | $E^5$ | $E^8$ | $E$ | $E^4$ | $E^7$ |
| 4 | 1 | $E^4$ | $E^8$ | $E^2$ | $E^6$ | 1 | $E^4$ | $E^8$ | $E^2$ | $E^6$ |
| 5 | 1 | $E^5$ | 1 | $E^5$ | 1 | $E^5$ | 1 | $E^5$ | 1 | $E^5$ |
| 6 | 1 | $E^6$ | $E^2$ | $E^8$ | $E^4$ | 1 | $E^6$ | $E^2$ | $E^8$ | $E^4$ |
| 7 | 1 | $E^7$ | $E^4$ | $E$ | $E^8$ | $E^5$ | $E^2$ | $E^9$ | $E^6$ | $E^3$ |
| 8 | 1 | $E^8$ | $E^6$ | $E^4$ | $E^2$ | 1 | $E^8$ | $E^6$ | $E^4$ | $E^2$ |
| 9 | 1 | $E^9$ | $E^8$ | $E^7$ | $E^6$ | $E^5$ | $E^4$ | $E^3$ | $E^2$ | $E$ |

## FIG.1

| n\k | 0 | 1 | 2 | 3 | 4 | 5 | 6 |
|---|---|---|---|---|---|---|---|
| 0 | 1 | 1 | 1 | 1 | 1 | 1 | 1 |
| 1 | 1 | $E$ | $E^2$ | $E^3$ | $E^4$ | $E^5$ | $E^6$ |
| 2 | 1 | $E^2$ | $E^4$ | $E^6$ | $E$ | $E^3$ | $E^5$ |
| 3 | 1 | $E^3$ | $E^6$ | $E^2$ | $E^5$ | $E$ | $E^4$ |
| 4 | 1 | $E^4$ | $E$ | $E^5$ | $E^2$ | $E^6$ | $E^3$ |
| 5 | 1 | $E^5$ | $E^3$ | $E$ | $E^6$ | $E^4$ | $E^2$ |
| 6 | 1 | $E^6$ | $E^5$ | $E^4$ | $E^3$ | $E^2$ | $E$ |

## FIG.2

$$[z(g^m \bmod N) - A_0] = \left[ E^{g^{N+m-i}} \right] \cdot [a(g^{N-i} \bmod N)]$$

$$
\begin{bmatrix}
z(3) - a_0 \\
z(2) - a_0 \\
z(6) - a_0 \\
z(4) - a_0 \\
z(5) - a_0 \\
z(1) - a_0
\end{bmatrix}
=
\begin{bmatrix}
E^3 & E & E^5 & E^4 & E^6 & E^2 \\
E^2 & E^3 & E & E^5 & E^4 & E^6 \\
E^6 & E^2 & E^3 & E & E^5 & E^4 \\
E^4 & E^6 & E^2 & E^3 & E & E^5 \\
E^5 & E^4 & E^6 & E^2 & E^3 & E \\
E & E^5 & E^4 & E^6 & E^2 & E^3
\end{bmatrix}
\cdot
\begin{bmatrix}
a(1) \\
a(5) \\
a(4) \\
a(6) \\
a(2) \\
a(3)
\end{bmatrix}
$$

## FIG.3

## FIG.4

FIG.5

FIG.6

3

FIG.7

FIG.8

q=1,2,3
M=3

4

FIG.9

FIG.10

FIG.11